(19) Europäisches Patentamt
European Patent Office
Office européen des brevets

(11) **EP 2 552 564 B1**

(12) **EUROPÄISCHE PATENTSCHRIFT**

(45) Veröffentlichungstag und Bekanntmachung des Hinweises auf die Patenterteilung:
**25.12.2013  Patentblatt 2013/52**

(21) Anmeldenummer: **11715876.6**

(22) Anmeldetag: **29.03.2011**

(51) Int Cl.:
***B01D 29/23*** *(2006.01)*      ***B01D 29/68*** *(2006.01)*

(86) Internationale Anmeldenummer:
**PCT/EP2011/001563**

(87) Internationale Veröffentlichungsnummer:
**WO 2011/124343 (13.10.2011 Gazette 2011/41)**

(54) **FILTERSYSTEM, INSBESONDERE FÜR DIE VISKOSEFILTRATION**

FILTER SYSTEM, IN PARTICULAR FOR VISCOSE FILTRATION

SYSTÈME DE FILTRATION, EN PARTICULIER POUR LA FILTRATION DE LA VISCOSE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **31.03.2010  DE 102010013507**

(43) Veröffentlichungstag der Anmeldung:
**06.02.2013  Patentblatt 2013/06**

(73) Patentinhaber: **GKN Sinter Metals Holding GmbH 42477 Radevormwald (DE)**

(72) Erfinder:
• **MÄHLIG, Enrico**
**50767 Köln (DE)**
• **STÖCKER, Dirk**
**57258 Freudenberg (DE)**
• **LUBITZ, Bernd**
**42855 Remscheid (DE)**

(74) Vertreter: **Maxton Langmaack & Partner Postfach 51 08 06 50944 Köln (DE)**

(56) Entgegenhaltungen:
EP-A2- 1 297 878      WO-A1-96/25217
CA-A- 672 320         DE-A1- 3 611 075
GB-A- 1 146 071       US-A- 3 574 509
US-A- 4 358 371       US-A1- 2009 184 504

EP 2 552 564 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung betrifft ein Filtersystem mit mindestens einer aus einem für ein zu filtrierendes Medium durchlässigen Lage, umfassend ein Vliesteil, als auch eine Verwendung derselben und eine Vorrichtung und Verfahren zur Filtration von Viskose.

Filtersystem der eingangs genannten Art ist insbesondere geeignet, in der Viskosefiltration eingesetzt zu werden. Jedoch sind derartige Filter auch in anderen Arten von Filtrationen einsetzbar.

Eine Filtervorrichtung zur kontinuierlichen Filtration von Viskose ist in DE 2 006 685 A1 beschrieben. Auf einem perforierten Hohlzylinder wird ein Filtermaterial mittels zweier Halbschalen von außen aufgespannt. Die Filtration erfolgt von innen nach außen. Ein kontinuierlicher Betrieb ist ermöglicht durch einen um die Längsachse des Hohlzylinders rotierenden Rückspülarm, welcher innen angebracht ist. Durch einen im Rückspülarm entstehenden Sog wird ein zu filtrierendes Medium im Gegenstrom partiell gereinigt. Der Hohlzylinder weist eine Perforierung auf, und muss mit den beiden Halbschalen genau fluchten, weshalb die Konstruktion der in der DE 2 006 685 A1 gezeigten Vorrichtung sehr aufwändig insbesondere in Hinblick auf die Anbringung der die Perforation bildenden Bohrungen ist.

Weiterhin ist aus EP 0 058 656 B1 ein Filterapparat für die Viskosefiltration bekannt. Dieser weist einen perforierten Hohlzylinder auf, welcher ein Filtermaterial trägt. Das Filtermaterial wird mit einem Spannmantel auf dem Hohlzylinder festgehalten. Durch eine konische Perforierung des gebildeten zylindrischen Filterkorbes wird einerseits eine hinreichende Stabilität desselben und andererseits eine maximale Ausnutzung des Filtermaterials erreicht.

In der Viskosefiltration hat sich als Filtermaterial das Metallfaservlies gegenüber Drahtgeweben aufgrund seiner höheren Permeabilität bei gleicher Filterfeinheit durchgesetzt. Ein derartiges Metallfaservlies bildet eine Lage, die an einer Stützlage, beispielsweise einen perforierten Hohlzylinder, auch Lochtrommel genannt, angelegt ist, und zur Erzielung eines Haltes von einem Spannmantel auf dem eine Stützlage bildenden Hohlzylinder gehalten wird, wobei der Spannmantel gebildet sein kann beispielsweise aus einem wie auch immer ausgebildeten Gewebe, perforiertem Blech oder einem Verbund aus Längsdrähten. Dabei wird zur Erhöhung der Steifigkeit des Metallfaservlieses dieses in aller Regel mit einem metallischen Gewebe verbunden, insbesondere durch Ansintern.

Nachteilig an solchen Filterlagen, welche ein Metallfaservlies mit auf mindestens einer Seite desselben angeordneten und mit diesem verbundenen metallischen Gewebe aufweisen, ist insbesondere, dass an den Kette-Schuss-Stellen des metallischen Gewebes Spannungsspitzen entstehen können, welche bei Durchführung einer zyklischen Filtration und Rückspülung zu einer mechanischen Zerstörung des Metallfaservlieses führen. Solches erfolgt insbesondere dann, wenn die Wirtschaftlichkeit einer entsprechenden Filtrationsanlage erhöht werden soll, wobei dann der Filtrationsdruck erhöht wird. Um diesem erhöhten Filtrationsdruck standzuhalten, wird die Metallfaservlieslage mit höheren Kräften auf dem die Stützlage bildenden perforierten Hohlzylinder aufgespannt, so dass eine unmittelbare Übertragung der Spannungsspitzen vom metallischen Gewebe an den Kette-Schuss-Stellen auf das Metallfaservlies erfolgt. Dies geschieht ebenso bei der Rückspülung zur Reinigung einer Viskosefiltrationsvorrichtung. Die mechanische Zerstörung des Metallfaservlieses wird dann noch weiter erhöht, wenn zwischen dem die Stützlage bildenden perforierten Hohlzylinder und der Metallfaservlieslage mit mit dieser verbundenem metallischem Gewebe, welches von der Stützlage wegzeigt, noch eine Zwischenlage ebenfalls aus metallischem Gewebe eingesetzt wird. Das Vorsehen einer solchen Zwischenlage ist in der Regel notwendig, da insbesondere durch eine zyklische Bewegung des den Filter bildenden Lagenverbundes bei Filtration und Rückspülung Scherbeanspruchungen des Metallfaservlieses an den Perforierungen des Hohlzylinders erzeugt würden, was ebenfalls zu einer Zerstörung der Metallfaservlieslage führt. Des Weiteren wäre es vorteilhaft, wenn die Filterlage mit einer höheren Spannkraft auf den Träger/Stützkörper/Stützlage (insbesondere eine Lochtrommel) aufgespannt werden könnte, um einen möglichst hohen Durchsatz und den damit verbundenen höheren Differenzdruck insbesondere bei der Viskosefiltration zu erreichen. Da jedoch das gesinterte Metallfaservlies im Vergleich zu metallischem Gewebe als Träger deutlich geringere Dehnung aufweist, kommt es bei hohen Spannkräften zum Ablösen des Metallfaservlieses vom metallischen Gewebe als Träger und damit zur Zerstörung des Filters. Schließlich tritt insbesondere bei Einsatz von den aus dem Stand der Technik bekannten Filtersystemen in Vorrichtungen zur Viskosefiltration, welche insbesondere als automatische Rückspülfilter ausgestaltet sind, das Problem auf, dass bei Vorliegen von Hinterschneidungen, insbesondere an Kette-Schuss-Stellen, im Filtersystem auch bei der Rückspülung insbesondere gelartige Partikel oder sonstige Feststoffe im Filtermaterial verbleiben, wodurch die Leistungsfähigkeit von insbesondere automatischen Rückspülfiltern, eingesetzt in der Viskosefiltration, erniedrigt ist.

WO 96/25217 A1 offenbart einen Flüssigkeitsfilter mit einem verbesserten Rückfluss, wobei ein Filtermaterial offenbart ist, dass aus zwei gelochten Blechen besteht, zwischen denen ein Filtergewebe platziert ist.

US 4,358,371 offenbart einen Rückspülfilter, der als Filtermaterial zwei Maschengewebe mit zwischen diesen angeordneten Filtervlies offenbart.

Es ist daher Aufgabe der vorliegenden Erfindung, ein Filtersystem zur Verfügung zu stellen, durch welches die mechanische Zerstörung einer aus einem Metallfaservlies gebildeten Lage zumindest vermindert wird im Vergleich zu den aus dem Stand der Technik bekannten Ausführungsformen.

In der GB 11 46071 A1 und der EP 1297878 A2 wird eine Vlieschicht offenbart, die mit einem Streckmetall versintert sein kann.

Diese Aufgabe wird durch ein Filtersystem der eingangs genannten Art gelöst mit einer durchlässigen Lage, umfassend mindestens ein Vliesteil und mindestens ein flachgewalztes Trägerteil aus Streckmetall oder Lochblech, welches mit mindestens einem Teilbereich einer Seite des Vliesteils verschweißt oder versintert ist, und mit einer Stützlage, wobei das Trägerteil auf einer Seite des Vliesteils angeordnet ist, die von einer Stützlage weg- oder auf diese hinzeigt. Die Verbindung zwischen Vliesteil und Trägerteil erfolgt im Sinne der vorliegenden Erfindung durch Verschweißung oder Versinterung, wobei weiter bevorzugt das Vliesteil mit dem Trägerteil versintert ist. Verbunden im Sinne der vorliegenden Erfindung ist dabei als das Vorliegen einer wie auch immer gearteten festen Verbindung des Vliesteils mit dem Trägerteil zu verstehen, so dass eine insgesamt einstückige durchlässige Lage entsteht. Nicht ausgeschlossen im Sinne der vorliegenden Erfindung ist dabei jedoch, dass Vliesteil und Trägerteil wieder voneinander trennbar sind.

Das Trägerteil ist ein Streckmetallteil oder ein Lochblech, besonders bevorzugt ein Streckmetallteil. Erfindungsgemäß ist das Trägerteil flachgewalzt, insbesondere ein flachgewalztes Streckmetallteil. Besonders vorteilhaft bei Einsatz eines insbesondere flachgewalzten Streckmetallteiles ist, dass aufgrund der dann fehlenden Hinterschneidungen auch eine bessere Rückspülbarkeit bei Einsatz des erfindungsgemäßen Filtersystems in der Viskoseherstellung, insbesondere bei Einsatz in einem Rückspülfilter, insbesondere einem automatisierten Rückspülfilter, gewährleistet ist, da sich die insbesondere Feststoffpartikel als auch insbesondere bei der Viskosefiltration auftretenden Gelpartikel mit höherer Effizienz bei der Rückspülung entfernen lassen.

Insbesondere bei Einsatz eines flachgewalzten Streckmetallteiles erhöht sich die Sinterkontaktfläche zwischen Metallfaservlies und Streckmetall auf nahezu die geschlossene Fläche des Streckmetalls. Bei Verwendung eines Drahtgewebes als Trägerteil gemäß dem Stand der Technik findet hingegen nur eine Versinterung an den hervorstehenden Kette-Schuss-Stellen mit dem Metallfaservlies statt. Durch die deutlich höhere Sinterkontaktfläche können höhere Spannkräfte beim Aufspannen auf den Träger/Stützkörper/Stützlage (insbesondere eine Lochtrommel) verwendet werden ohne dass sich das Metallfaservlies vom Trägerteil ablöst.

Durch Bildung eines Verbundes aus einem Vliesteil und einem Trägerteil, ausgebildet als Streckmetallteil oder Lochblech, zu einer Filterlage werden vorteilhafterweise Spannungsspitzen, welche durch Bildung von Verbünden aus metallischen Geweben und Metallfaservliesen, die aus dem Stand der Technik bekannt sind, vermieden oder zumindest verringert. Die mehr oder weniger ebene Oberfläche insbesondere eines flachgewalzten Streckmetallteils beziehungsweise Lochblechs führt insbesondere bei einem erhöhten Durchsatz des zu filtrierenden Mediums zumindest zu einer Verringerung von Spannungsspitzen. Letztendlich wird eine erhöhte Lebensdauer der das Vliesteil umfassenden Filterlage erzielt durch Verringerung der mechanischen Zerstörungen des Vliesteils derselben. Zudem ermöglicht der Gegenstand der vorliegenden Erfindung die Aufbringung erheblich höherer Spannkräfte, welche durch einen Spannmantel ausgeübt werden. Höhere Filtrations- oder Rückspüldrücke, insbesondere bei der Filtration von Viskose, sind ermöglicht.

Ist das Trägerteil aus Streckmetall ausgebildet, so weist dieses vorzugsweise eine Maschenlänge in einem Bereich von etwa 0,08 mm bis etwa 5 mm im ungewalzten Zustand auf, bevorzugt in einem Bereich von etwa 0,4 mm bis etwa 4 mm, weiter bevorzugt in einem Bereich von etwa 0,5 mm bis etwa 2,5 mm. Das Streckmetallteil weist vorzugsweise eine Maschenbreite in einem Bereich von etwa 0,04 mm bis 4 mm, vorzugsweise in einem Bereich von etwa 0,2 mm bis etwa 3,8, weiter bevorzugt in einem Bereich von etwa 0,8 mm bis etwa 1,8 mm auf, bezogen auf ein ungewalztes Streckmetallteil. Die Stegbreite eines ungewalzten Streckmetallteils beträgt vorzugsweise etwa 0,08 mm bis etwa 2,5 mm, vorzugsweise etwa 0,1 mm bis etwa 2 mm, vorzugsweise etwa 0,15 mm bis etwa 0,5 mm. Vorzugsweise weist das poröse Trägerteil eine Stärke (auch: Stegdicke) in einem Bereich von etwa 0,1 mm bis etwa 3 mm, bevorzugt etwa 0,12 mm bis etwa 2 mm, auf. Die Stegdicke und die Stegbreite des erfindungsgemäß eingesetzten ungewalzten Streckmetallteils sind dabei vorzugsweise gleich, das heißt die Stegdicke liegt in den vorstehend betreffend die Stegbreite genannten bevorzugten Bereichen. Vorteilhafterweise weist das flachgewalzte, das heißt kalandrierte Streckmetallteil eine Maschenlänge in einem Bereich von etwa 1,5 mm bis etwa 2,5 mm, weiter bevorzugt bis etwa 2,3 mm, und eine Maschenbreite in einem Bereich von etwa 1 mm bis etwa 2 mm, weiter bevorzugt in einem Bereich von etwa 1,2 mm bis etwa 1,8 mm, auf. Die Stegbreite als auch die Stegdicke des erfindungsgemäß eingesetzten kalandrierten Streckmetalls liegt vorzugsweise in einem Bereich von etwa 0,2 mm bis etwa 0,5 mm, weiter bevorzugt in einem Bereich von etwa 0,2 mm bis etwa 0,4 mm. Das blechartige Trägerteil weist vorzugsweise einen freien Querschnitt in einem Bereich von etwa 15 % bis etwa 70 %, bevorzugt in einem Bereich von etwa 30 % bis etwa 65 % sowohl im ungewalzten als auch gewalzten Zustand, auf. Der freie Querschnitt $F_q$ [%] wird gemäß der Formel

$$F_q = (1 - \frac{2B}{W}) \cdot 100\%$$

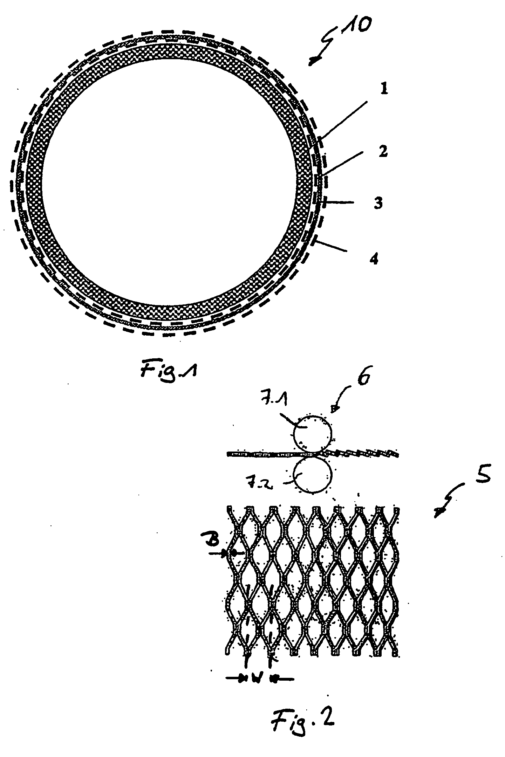

berechnet, wobei B die Stegbreite und W die Maschenbreite ist (siehe hierzu Fig. 2).

Das besonders vorteilhafterweise im erfindungsgemäßen Filtersystem, aber auch in der erfindungsgemäßen Vorrichtung und dem erfindungsgemäßen Verfahren, wie weiter unten beschrieben, eingesetzte flachgewalzte, das heißt kalandrierte Streckmetallteil ist vorteilhaftweise auf eine Stärke kalandriert, die der Stegdicke des ungewalzten Streckmetallteiles entspricht, beziehungsweise die Stegdicke des ungewalzten Streckmetallteiles nur um bis zu etwa 50 %, weiter bevorzugt um bis zu etwa 40 %, noch weiter bevorzugt um bis zu etwa 35 %, übertrifft. Beispielsweise kann ein ungewalztes Streckmetallteil mit einer Stegdicke von etwa 0,3 mm kalandriert werden auf etwa 0,3 mm bis etwa 0,45 mm, weiter bevorzugt bis etwa 0,4 mm.

Weiter bevorzugt weist das im erfindungsgemäßen Filtersystem, in der erfindungsgemäßen Vorrichtung als auch dem erfindungsgemäßen Verfahren vorteilhafterweise eingesetzte flachgewalzte Streckmetallteil einen Durchfluss, bei einem Differenzdruck von 200 Pa, insbesondere bei einer Kalandrierung auf etwa die Stegdicke oder aber um einen um bis zu etwa 50 %, bevorzugt bis zu etwa 40 %, weiter bevorzugt bis zu etwa 35 % die Stegdicke übertreffenden Wert, in einem Bereich von etwa 3.000 l/(dm$^{2}$*min) bis etwa 4.000 l/(dm$^{2}$*min), weiter bevorzugt in einem Bereich von etwa 3.200 l/(dm$^{2}$*min) bis etwa 3.700 l/(dm$^{2}$*min). Besonders bevorzugt liegt der Durchfluss bei einem Differenzdruck von 200 Pa eines auf etwa die Stegdicke kalandrierten flachgewalzten Streckmetallteils, welches besonders bevorzugt zur Viskosefiltration, weiter bevorzugt in einem Rückspülfilter, noch weiter bevorzugt in einem automatischen Rückspülfilter, eingesetzt wird, in einem Bereich von etwa 3.200 l/(dm$^{2}$*min) bis etwa 3.500 l/(dm$^{2}$*min). Das dabei eingesetzte vorzugsweise flachgewalzte Streckmetallteil weist vorzugsweise eine Maschenlänge in einem Bereich von etwa 1,8 mm bis etwa 2,15 mm und eine Maschenbreite in einem Bereich von etwa 1,35 mm bis etwa 1,65 mm, eine Stegdicke in einem Bereich von etwa 0,2 mm bis etwa 0,4 mm und eine Stegbreite im gleichen Bereich, wie bei der Stegdicke genannt, auf. Der Durchfluß wird im Sinne der vorliegenden Erfindung mit einem Luftdurchlässigkeits-Prüfgerät FX 3300 Labotester **III** der Firma Textest Instruments, gemäß DIN EN ISO 9237 unter Anwendung einer Prüffläche von 20 cm$^{2}$ und einem Differenzdruck von 200 Pa bestimmt.

Bevorzugt weist die durchlässige Lage einen Durchfluss, vorzugsweise bestehen aus einem Vliesteil und einem Streckmetallteil, gemessen bei 200 Pa Differenzdruck, in einem Bereich von etwa 40 l/(dm$^{2}$*min) bis etwa 900 l/(dm$^{2}$*min), weiter bevorzugt in einem Bereich von etwa 100 l/(dm$^{2}$*min) bis etwa 800 l/(dm$^{2}$*min), auf.

Besonders bevorzugt in einer alternativen Ausführungsform der vorliegenden Erfindung weist das Filtersystem eine Lage aus mindestens einem Vliesteil und mindestens einem Trägerteil aus Streckmetall auf, welches mit mindestens einem Teilbereich mindestens einer Seite des Vliesteils verschweißt oder versintert ist, wobei das Streckmetall flachgewalzt ist, und eine Maschenlänge in einem Bereich von etwa 1,8 mm bis etwa 2,2 mm, eine Maschenbreite in einem Bereich von etwa 1,3 mm bis etwa 1,6 mm und eine Stegdicke als auch Stegbreite in einem Bereich von etwa 0,2 mm bis etwa 0,4 mm aufweist, mit einem Durchfluss bei einem Differenzdruck von 200 Pa in einem Bereich von etwa 40 l/(dm$^{2}$*min) bis etwa 900 l/(dm$^{2}$*min), weiter bevorzugt in einem Bereich von etwa 100 l/(dm$^{2}$*min) bis etwa 800 l/(dm$^{2}$*min), eingesetzt in der Viskosefiltration, insbesondere in Rückspülfiltern, insbesondere automatischen Rückspülfiltern. Filtersysteme wie vorstehend beschrieben ermöglichen bei der Konstruktion insbesondere von automatischen Rückspülfiltern, insbesondere zur Viskosefiltration, dass bei einem Aufspannen derselben auf einem Träger/Stützkörper/Stützlage, beispielsweise einer Lochtrommel, einerseits Druckspitzen, wie vorstehend beschrieben, vermieden, andererseits auch eine Erhöhung der Steifigkeit und Festigkeit aufgrund einer Verringerung der Scherung zwischen dem beispielsweise als Lochtrommel ausgebildeten Träger/Stützlage und der Vlieslage oder einer etwa noch zwischen der Stützlage, insbesondere ausgebildet als Lochtrommel, und der Vlieslagenseite des Filtersystems angeordneten Zwischenlage, ausgebildet vorzugsweise als flachgewalztes Streckmetallteil, auftritt. Auch weist ein solches Filtersystem eine herragende Rückspülbarkeit insbesondere bei Einsatz in der Viskosefiltration bei Verwendung in Rückspülfiltern auf.

Ist das Trägerteil aus Streckmetall, kann dieses eine Maschenform in Form einer Rautenmasche, einer Langstegmasche, Sechseckmasche, Rundmasche, Quadratmasche oder aber Sondermasche aufweisen, wobei besonders bevorzugt eine Ausbildung als Rauten- oder Quadratmasche ist. Vorzugsweise wird im Sinne der vorliegenden Erfindung ein bevorzugt quadratmaschiges Streckgitter flachgewalzt, das heißt kalandriert, eingesetzt. Ist das Trägerteil als Lochblech ausgebildet, kann dieses unterschiedlichste Lochformen aufweisen, beispielsweise eine Rundlochung, Quadratlochung, Sechseckslochung, Langlochung, Zierlochung oder sonstige Sonderlochung, wobei besonders bevorzugt eine Rundlochung ist.

Das Vliesteil im Sinne der vorliegenden Erfindung ist vorzugsweise ein faserorientiertes und/oder Wirr-Vliesteil. Die Fasern des Vliesteiles sind dabei vorzugsweise durch eine Wärmebehandlung, bevorzugt durch Sintern, miteinander verbunden. In einer weiter bevorzugten Ausführungsform der vorliegenden Erfindung ist das Vliesteil selbst mehrlagig ausgebildet, und besteht vorzugsweise aus einer oder mehreren Lagen Wirrfasern. In einer weiter bevorzugten Ausführungsform können die im Vliesteil eingesetzten Fasern, insbesondere Wirrfasern, unterschiedliche Faserdurchmesser aufweisen. In einer weiter bevorzugten Ausführungsform der vorliegenden Erfindung weisen die Wirrfasern bei einer mehrlagigen Ausbildung des Vliesteiles in jeder einzelnen Lage unterschiedliche Faserdurchmesser zueinander, aber ähnliche Faserdurchmesser innerhalb der jeweiligen Lage auf. Die Faserdurchmesser schwanken um einen Mittelwert mit Abweichungen von ± 10 %. Ein faserorientiertes Vliesteil im Sinne der vorliegenden Erfindung ist ein solches, dessen Fasern in einer Richtung oder überkreuz abgelegt werden, wobei besonders bevorzugt eine Ablage überkreuz im Sinne der vorliegenden Erfindung ist.

Das Material für das Vliesteil und das Trägerteil kann je nach Anwendung gewählt werden, und der angesprochene Fachmann ist ohne Weiteres in der Lage, geeignete Materialien vor dem Hintergrund seines fachmännischen Wissens auszuwählen. Besonders bevorzugt ist das Trägerteil und/oder das Vliesteil aus einem Material gebildet, ausgewählt aus einer Gruppe umfassend eisen- und/oder nickelhaltige Legierungen. Beispielhafte Materialien sind Nickelbasislegierungen wie Hastelloy oder Inconel, aber auch Stähle wie Chrom-Nickel-Stahl. Vorzugsweise eingesetzte eisenhaltige Materialien sind die Legierungen AISI 304L (1.4306), AISI 316L (1.4404), AISI 904 (1.4539), Inconel 600 (2.4816), Inconel 625 (2.4856), Monel 400 (2.4360) und Hastelloy B, X und C. Die im Vliesteil eingesetzten Fasern haben vorzugsweise Durchmesser in einem Bereich von etwa 0,1 bis etwa 250 $\mu$m, bevorzugt etwa 1,8 $\mu$m bis etwa 25 $\mu$m, und eine Länge von etwa 0,5 mm bis etwa 100 mm, bevorzugt in einem Bereich von etwa 2 mm bis etwa 60 mm.

Das erfindungsgemäße Filtersystem umfasst außer der ersten Lage, umfassend das Vliesteil und das Trägerteil, mindestens eine weitere Lage. Diese weitere Lage kann beispielsweise als Zwischenlage oder aber Außenlage, welche einen Spannmantel bildet, ausgebildet sein, und ist erfindungsgemäß eine Stützlage, das heißt beispielsweise ein Hohlzylinder mit Perforationen oder ein Lochmantel als Teil einer Lochtrommel. Erfindungsgemäß zeigt das Trägerteil, angeordnet auf nur einer Seite des Vliesteils, von einer weiteren, als Stützlage ausgebildeten Lage, insbesondere in Form einer perforierten Hohlzylinders oder eines Lochmantels als Teil einer Lochtrommel, weg. In einer weiter bevorzugten Ausführungsform weist der erfindungsgemäße Filter weiterhin mindestens eine Zwischenlage, bevorzugt aus einem Streckmetallteil, weiter bevorzugt aus einem flachgewalzten Streckmetallteil, und/oder mindestens eine einen Spannmantel bildende Außenlage auf. Die Zwischenlage kann dabei zwischen der Stützlage und der Vliesteilseite der aus Vliesteil und Trägerteil gebildeten Lage beziehungsweise zwischen Vliesteilseite des Vliesteils und Trägerteil gebildeten Lage und der Außenlage angeordnet sein, wohingegen die Außenlage auf der Trägerteilseite aus Vliesteil und Trägerteil gebildeten Lage beziehungsweise der Zwischenlage zur Anlage kommt. Es ist dabei eine Ausbildung der das Vliesteil und das Trägerteil umfassenden Lage derart bevorzugt, dass das Trägerteil nur auf einer Seite des Vliesteils angeordnet ist. Die Zwischenlage kann mit dem Vliesteil verschweißt oder versintert sein, kann aber auch nur lose auf dem Vliesteil aufliegen.

In einer besonders bevorzugten Ausführungsform der vorliegenden Erfindung ist das Filtersystem mindestens vierlagig aus einer Stützlage, einer daran anschließenden Zwischenlage aus einem Streckmetall, bevorzugt flachgewalzt, einer daran anschließenden Lage aus Vliesteil und Trägerteil, die mit der Vliesteilseite der Zwischenlage zugewandt ist, und einer Außenlage gebildet, wobei die Außenlage bevorzugt als Spannmantel ausgebildet ist. Dabei ist im Sinne der vorliegenden Erfindung nicht ausgeschlossen, dass beispielsweise das Vliesteil aus mehreren Lagen insbesondere von Wirrwarrfasern, insbesondere unterschiedlichen Durchmessers, besteht. Dadurch, dass die Zwischenlage vorzugsweise ein Streckmetallteil ist, welches voll- oder teilflächig auf der Stützlage angeordnet sein kann, wird ebenfalls der Entstehung von Spannungsspitzen bei Betrieb des erfindungsgemäßen Filters entgegengewirkt. Das Streckmetallteil dieser Zwischenlage ist dabei vorzugsweise ebenso ausgebildet wie weiter oben in Zusammenhang mit dem Trägerteil beschrieben, und weiter bevorzugt flachgewalzt.

Des Weiteren betrifft die vorliegende Erfindung eine Verwendung des erfindungsgemäßen zweilagigen Filtersystems, oder aber in der alternativen Ausführungsform eines Filtersystems mit mindestens einer Lage, umfassend ein Trägerteil aus flachgewalztem Streckmetall und mindestens ein Vliesteil, wie vorstehend beschrieben zur Viskosefiltration, wobei jedoch auch der Einsatz des erfindungsgemäßen Filtersystems in anderen Filtrationen nicht ausgeschlossen ist, als auch eine Vorrichtung zur Filtration von Viskose, wie erfindungsgemäß nachfolgend beschrieben, umfassend das mindestens zweilagige erfindungsgemäße Filtersystem oder das alternativ ausgebildete Filtersystem, mit mindestens einem mit mindestens einem Teilbereich einer Seite des Vliesteils verbundenen Trägerteil zur Bildung einer für ein Material durchlässigen Lage, wie weiter oben beschrieben.

Schließlich betrifft die vorliegende Erfindung auch ein Verfahren zur Filtration von Viskose, wobei ein zu filtrierendes Medium, insbesondere ein fluides Medium mit Viskose, einer Vorrichtung zugeführt und durch ein der Vorrichtung zugeordnetes erfindungsgemäßes Filtersystem filtriert und aus der Vorrichtung herausgeführt wird. Bei der Vorrichtung kann es sich dabei um eine Lochtrommel oder einen perforierten Hohlzylinder einer Filtrationsanlage handeln, wobei der perforierte Hohlzylinder bzw. die Lochtrommel entsprechende Zuführungen für das zu filtrierende Medium aufweist. Insbesondere dann, wenn die Vorrichtung als perforierter Hohlzylinder bzw. Lochtrommel ausgebildet ist, und der perforierte Bereich derselben mit einem erfindungsgemäßen Filtersystem versehen ist, welches als Zwischenlage ein gewalztes Streckmetallteil und im Übrigen ein Vliesteil mit mit diesem versinterten Lochblech oder Streckmetallteil, bevorzugt flachgewalztem Streckmetallteil, aufweist, wobei weiter bevorzugt auch die Zwischenlage mit dem Vliesteil verschweißt oder versintert, bevorzugt versintert, ist, werden Spannungsspitzen auch bei hohen Filtrations- oder Rückspüldrücken im erfindungsgemäßen Verfahren vermieden, wodurch die Leistungsfähigkeit des erfindungsgemäßen Verfahrens im Vergleich zu solchen aus dem Stand der Technik bekannten Verfahren erheblich gesteigert wird.

Vorteilhafterweise ist die zur Filtration von Viskose eingesetzte Vorrichtung als Rückspülfilter ausgebildet, weiter bevorzugt als automatischer Rückspülfilter.

Besonders bevorzugt wird das zu filtrierende Medium mit einer Temperatur in einem Bereich von etwa 10 °C bis etwa 55 °C, weiter bevorzugt in einem Bereich von etwa 15 °C bis etwa 45 °C, dem in der erfindungsgemäßen Vorrichtung angeordneten Filtersystem zugeführt.

Weiter bevorzugt wird bei der Viskosefiltration ein flachgewalztes Streckmetallteil, weiter bevorzugt flachgewalzt bis auf eine Dicke, welche der Stegdicke des ungewalzten Streckmetallteiles entspricht, mit einem Durchfluss, gemessen bei einem Differenzdruck von 200 Pa, in einem Bereich von etwa 3.000 l/(dm$^{2*}$min) bis etwa 4.000 l/(dm$^{2*}$min), weiter bevorzugt in einem Bereich von etwa 3.200 l/(dm$^{2*}$min) bis etwa 3.700 l/(dm$^{2*}$min), weiter bevorzugt wird eine Lage aus mindestens einem Vliesteil und mindestens einem Trägerteil aus Streckmetall, insbesondere einem flachgewalztem, mit einem Durchfluss bei einem Differenzdruck von 200 Pa in einem Bereich von etwa 40 l/(dm$^{2*}$min) bis etwa 900 l/(dm$^{2*}$min), weiter bevorzugt in einem Bereich von etwa 100 l/(dm$^{2*}$min) bis etwa 800 l/(dm$^{2*}$min), eingesetzt.

Vorteilhafterweise lassen sich mit dem erfindungsgemäßen Verfahren, auch der erfindungsgemäßen Vorrichtung, insbesondere in der Viskosefiltration bei Einsatz von Rückspülfiltern geringe Differenzdrücke mit niedrigen Rückspülmenge trotz häufigen Rückspülens realisieren.

Diese und weitere Vorteile der vorliegenden Erfindung werden anhand der nachfolgenden Figuren näher erläutert. Es zeigen:

Fig. 1:     einen Querschnitt durch ein erfindungsgemäßes Filtersystem mit vierlagigem Aufbau zur Viskosefiltration; und

Fig 2:     ein flachgewalztes Streckmetallteil, wie dieses in dem erfindungsgemäßen Filtersystem zum Einsatz kommen kann.

Zunächst sei vorausgeschickt, dass die Erfindung nicht auf die in den Figuren gezeigten Merkmalskombinationen beschränkt ist. Vielmehr sind die jeweils in der Beschreibung einschließlich Figurenbeschreibung offenbarten Merkmale mit denjenigen in den Figuren angegebenen Merkmalen kombinierbar. Insbesondere ist die Ausbildung der in der Fig. 1 gezeigten Ausführungsform des erfindungsgemäßen Filters in einer vierlagigen Ausbildung nur eine der möglichen Ausgestaltungsformen, ebenso wie dies bei dem in der Fig. 2 gezeigten Streckmetallteil der Fall ist. Letzteres kann beispielsweise auch andere Maschenformen aufweisen, wohingegen der erfindungsgemäße Filter entgegen Fig. 1 nicht nur auf einen Lochmantel, sondern beispielsweise auch als plattenartig etc. ausgebildet sein kann. Auch kann eine Zwischenlage 2 zwischen einer Vliesteilseite einer aus Vliesteil und Trägerteil gebildeten Lage 3 und einer Außenlage 4 angeordnet sein. Schließlich ist auch darauf hinzuweisen, dass die in den Ansprüchen aufgenommenen Bezugzeichen in keiner Weise den Schutzbereich der vorliegenden Erfindung beschränken sollen, sondern lediglich auf die in den Figuren gezeigten Ausführungsbeispiele verweisen. Insbesondere ist im Sinne der vorliegenden Erfindung ein erfindungsgemäßes Filtersystem einlagig ausgestaltet mit einer für ein zu filtrierendes Medium durchlässige Lage mit mindestens einem Vliesteil und mindestens einem Trägerteil, wobei das Trägerteil vorzugsweise als flachgewalztes Streckmetallteil ausgebildet ist.

Fig. 1 zeigt ein erfindungsgemäßes Filtersystem 10 für die Viskosefiltration im Querschnitt. Als Stützlage weist diese einen Lochmantel 1 auf, wobei dieser Lochmantel beispielsweise ausgebildet sein kann wie in der EP 0 058 656 B1 beschrieben. Insbesondere kann die Perforierung des Lochmantels, welcher im Sinne der vorliegenden Erfindung als Stützlage dient, beispielsweise aus konischen Bohrungen ausgeführt sein. Es können jedoch auch sonstige Arten von Perforierungen vorgesehen sein, beispielsweise in Form von parallel angeordneten und waagerecht und/oder quer verlaufenden Rillen mit dreieckigem, trapezförmigem oder halbkreisförmigem Profil, wobei in diesen Rillen bevorzugt im gleichmäßigen Abstand zueinander Bohrungen zum Flüssigkeitsdurchtritt vorgesehen sein können.

Auf die Außenseite der Stützlage 1 aufgebracht ist eine Zwischenlage 2 aus einem flachgewalzten Streckmetall, welche zumindest die gesamte mit Perforierungen versehene Oberfläche der Stützlage 1 bedeckt. Das Streckmetallteil der Zwischenlage 2 ist dabei ebenso ausgebildet wie das Streckmetallteil der Lage 3. Insoweit wird auf die dortigen Ausführungen verwiesen.

Nachfolgend der Zwischenlage 2 ist eine Lage 3 aus einem Vliesteil und einem Streckmetallteil als Trägerteil angeordnet. Das Streckmetallteil ist dabei auf der der Stützlage 1 abgewandten Seite des Vliesteils auf dem Vliesteil angeordnet, und zwar über die gesamte durch diese Seite gebildete Fläche. Die Lage 3 ist dabei ebenfalls derart ausgebildet, dass diese zumindest den gesamten Perforationsbereich der Stützlage 1 abdeckt. Die Zwischenlage 2 ist in Kontakt mit der Vliesteilseite der Lage 3, und nicht mit dieser versintert.

Das Streckmetallteil 5 der Lage 3 ist in Fig. 2, die nicht maßstabsgerecht ist, gezeigt. Dieses ist flachgewalzt, und weist beispielhaft im ungewalzten Zustand eine Rautenmasche auf mit einer Stegbreite von 0,4 mm und einer Maschenlänge von 1,8 mm bei einer Maschenbreite von 1,6 mm, wobei vorteilhafterweise ein flachgewalztes, insbesondere quadratmaschiges Streckmetallteil eingesetzt wird mit einer Maschenlänge in einem Bereich von etwa 1,8 mm bis etwa 2,2 mm und einer Maschenbreite in einem Bereich von etwa 1,3 mm bis etwa 1,6 mm. Der freie Querschnitt Fq des flachgewalzten Streckmetalls beträgt etwa 50 %. Das Streckmetallteil 5 kann ebenso wie das Vliesteil der Lage 3 aus der Legierung 316L gebildet sein.

Nachfolgend der Lage 3 ist ein Spannmantel 4 angeordnet, welcher grundsätzlich aus einem Lochblech gebildet sein kann, oder aber aus einem metallischen Gewebe. Das Vliesteil der Lage 3 kann im Übrigen auch mehr als eine Lage vorzugsweise von Wirrfasern aufweisen, wobei die einzelnen Lagen des Vliesteiles der Lage 3 dabei jeweils unterschiedliche Faserdurchmesser, vorzugsweise in einem Bereich von etwa 1,8 μm bis etwa 25 μm, aufweisen können.

Eine erfindungsgemäße Lage 3 aus Vliesteil mit einem mit mindestens einem Teilbereich mindestens einer Seite des Vliesteils verbundenen Trägerteil 5 in Form eines Streckmetalls wurde wie folgt hergestellt:

Es wurde ein einlagiges Vliesteil aus Wirrfasern mit einem Durchmesser von 12 μm (± 10 %) und eine Länge von etwa 10 mm bis etwa 40 mm (± 10 %) aus der Eisenlegierung 316L hergestellt, wobei die Fasern bündelgezogen waren. Das Wirrfaser-Haufwerk in einer Stärke von etwa 2 mm vor Sintern (nach Sintern etwa 0,4 mm) wurde anschließend einer Wärmebehandlung durch Sintern zur Verbindung der einzelnen Fasern unterzogen, wobei die Sinterung bei einer Temperatur von etwa 1200° C im Vakuum durchgeführt wurde. Nachfolgend wurde das solchermaßen gebildete Metallfaservliesteil durch Sinterung mit einem gewalzten Streckmetallteil ebenfalls aus der Eisenlegierung 316L verbunden. Das flachgewalzte, das heißt kalandrierte Streckmetallteil wies dabei eine offene Fläche/freien Querschnitt von etwa 50 %, eine Maschenlänge von etwa 1,8 mm und eine Maschenbreite von etwa 1,6 mm bei einer Stegdicke von etwa 0,4 mm und einer Stegbreite von etwa 0,4 mm auf. Die Flachwalzung des Streckmetallteils erfolgte durch einen Kalander 6 mit zwei gegenläufig rotierenden Metallwalzen 7.1, 7.2 mit glatter Oberfläche und einem entsprechend in Hinblick auf das flachzuwalzende Streckmetallteil eingestellten Spalt. Die Versinterung des Vliesteiles mit dem Streckmetallteil erfolgte unter den vorstehend angegebenen Sinterparametern. Es kann alternativ jedoch auch sogleich vorgesehen sein, in einem einzigen Sinterschritt die Lage 3 herzustellen, indem auf das Wirrfaser-Haufwerk das Streckmetallteil aufgelegt wird. Das Streckmetallteil bedeckt im vorgenannten Beispiel die gesamte Fläche einer Seite des Vliesteiles, wohingegen die gegenüberliegende Seite des Vliesteiles nicht mit einem Streckmetallteil insbesondere durch Sintern verbunden wurde. Dies ist jedoch im Sinne der vorliegenden Erfindung ebenfalls möglich, so dass dann die Zwischenlage 2 und die Lage 3 gemäß Fig. 1 miteinander verbunden sind. Alternativ kann im Sinne der vorliegenden Erfindung beispielsweise auch vorgesehen werden, dass das Streckmetallteil beispielsweise nur in Form mehrerer Bänder auf einer oder beiden Seiten des Vliesteiles angeordnet ist, oder aber eben nur auf Teilbereichen auf einer oder beiden Seiten des Vliesteiles angeordnet ist, insbesondere solchen Bereichen, welche ihre Entsprechung in einer Perforation in der Stützlage 1 gemäß Fig. 1 finden.

Im Übrigen wurde bei der Herstellung des Vliesteiles ein Flächengewicht in einem Bereich von etwa 140 g/m$^2$ bis etwa 600 g/m$^2$ eingestellt. Das hergestellte gesinterte Vliesteil wies dabei eine Porosität von > 80 % auf, das solchermaßen hergestellte Vliesteil mit verbundenem Streckmetallteil, auf einer Seite desselben vollflächig angeordnet, wies ebenfalls eine Porosität > 80 % auf, bezogen auf das Vliesteil. Die Porosität des Vliesteils wird vorteilhafterweise durch den Verbund mit dem Trägerteil im Sinne der Erfindung nicht reduziert. Der Durchfluss, gemessen bei einem Differenzdruck von 200 Pa, der Lage 3 mit dem flachgewalzten, das heißt kalandrierten Streckmetallteil und dem mit diesem versinterten, oben beschriebenen Vliesteil beträgt bei Kalandrierung des Streckmetallteils auf etwa 0,4 mm, das heißt auf etwa die Stegdicke, etwa 500 l/(dm$^{2*}$min).

Durch die vorliegende Erfindung wird somit ein Filtersystem zur Verfügung gestellt, welcher beispielsweise in Filtervorrichtungen gemäß der EP 0 058 656 B1 erfolgreich eingesetzt werden kann, und besonders langlebig ist.

**Patentansprüche**

1. Filtersystem mit mindestens einer aus einem für ein zu filtrierendes Medium durchlässigen Lage (3), umfassend mindestens ein Vliesteil und mindestens ein flachgewalztes Trägerteil (5) aus Streckmetall oder Lochblech, welches mit mindestens einem Teilbereich einer Seite des Vliesteils verschweißt oder versintert ist, und einer Stützlage (1), wobei das Trägerteil (5) auf einer Seite des Vliesteils angeordnet ist, die von der Stützlage (1) weg- oder auf diese hinzeigt.

2. Filtersystem gemäß Anspruch 1, **dadurch gekennzeichnet, dass** das Trägerteil (5) als Streckmetallteil ausgebildet eine Maschenlänge in einem Bereich von etwa 0,08 mm bis etwa 5 mm aufweist.

3. Filtersystem gemäß einem der vorhergehenden Ansprüche, **dadurch gekennzeichnet, dass** das Trägerteil (5) und/oder das Vliesteil aus einem Material gebildet ist, ausgewählt aus einer Gruppe umfassend eisen- und/oder nickelhaltige Legierungen.

**4.** Filtersystem gemäß einem der vorhergehenden Ansprüche, **dadurch gekennzeichnet, dass** das Vliesteil ein faserorientiertes und/oder Wirr-Vliesteil ist.

**5.** Filtersystem gemäß Anspruch 4, **dadurch gekennzeichnet, dass** das Vliesteil aus einer oder mehreren Lagen Wirrfasern besteht.

**6.** Filtersystem gemäß einem der Ansprüche 4 oder 5, **dadurch gekennzeichnet, dass** die Wirrfasern unterschiedliche Faserdurchmesser aufweisen.

**7.** Filtersystem gemäß einem der vorhergehenden Ansprüche, **dadurch gekennzeichnet, dass** dieses weiterhin mindestens eine Zwischenlage (2), bevorzugt aus einem Streckmetall, und/oder mindestens eine einen Spannmantel bildende Außenlage (4) aufweist.

**8.** Filtersystem gemäß einem der vorhergehenden Ansprüche, **dadurch gekennzeichnet, dass** die Stützlage (1) als Lochmantel ausgebildet ist.

**9.** Verfahren zur Filtration von Viskose, **dadurch gekennzeichnet, dass** ein zu filtrierendes Medium einer Vorrichtung zugeführt und durch ein der Vorrichtung zugeordnetes Filtersystem gemäß einem der Ansprüche 1 bis 8 filtriert und aus der Vorrichtung herausgeführt wird.

**10.** Verfahren gemäß Anspruch 9, **dadurch gekennzeichnet, dass** die Vorrichtung als Rückspülfilter, insbesondere als ein automatischer Rückspülfilter, ausgestaltet ist.

**11.** Verfahren gemäß einem der Ansprüche 9 oder 10, **dadurch gekennzeichnet, dass** ein zu filtrierendes Medium mit einer Temperatur in einem Bereich von etwa 10 °C bis etwa 55 °C in der Vorrichtung dem Filtersystem zugeführt wird.

**12.** Verfahren gemäß einem der Ansprüche 9 bis 11, **dadurch gekennzeichnet, dass** dieses mit einem Filtersystem durchgeführt wird, wobei die durchlässigen Lage (3) einen Durchfluss, gemessen bei 200 Pa Differenzdruck, in einem Bereich von etwa 40 l/(dm$^2$*min) bis etwa 900 l/(dm$^2$*min) aufweist.

**13.** Vorrichtung zur Filtration von Viskose gemäß einem der Ansprüche 9 bis 12, umfassend ein Filtersystem gemäß einem der Ansprüche 1 bis 8.

**14.** Verwendung eines Filtersystems nach Anspruch 1 in einer Vorrichtung zur Filtration von Viskose oder einem Verfahren zur Filtration von Viskose.

**Claims**

**1.** A filter system having at least one layer (3) permeable for a medium to be filtered, comprising at least one non-woven part and at least one flat-rolled carrier part (5) made of expanded metal or perforated sheet metal, which is welded or sintered to at least a partial region of a side of the non-woven part, and a supporting layer (1), wherein the carrier part (5) is disposed on a side of the non-woven part that is directed away from the supporting layer (1) or towards it.

**2.** A filter system according to Claim 1, **characterized in that** the carrier part (5) designed in the form of an expanded metal part has a mesh length in a range of from approximately 0.08 mm to approximately 5 mm.

**3.** A filter system according to one of the preceding Claims, **characterized in that** the carrier part (5) and/or the non-woven part is or are formed from a material selected from a group comprising iron- and/or nickel-containing alloys.

**4.** A filter system according to any one of the preceding Claims, **characterized in that** the non-woven part is a non-woven part including orientated and/or randomly laid-down fibres.

**5.** A filter system according to Claim 4, **characterized in that** the non-woven part comprises one or more layers of randomly laid-down fibres.

**6.** A filter system according to one of Claims 4 or 5, **characterized in that** the randomly laid down fibres have different fibre diameters.

**7.** A filter system according to any one of the preceding Claims, **characterized in that** it further comprises at least one intermediate layer (2), preferably of expanded metal, and/or at least one outer layer (4) forming a clamping jacket.

**8.** A filter system according to any one of the preceding Claims, **characterized in that** the supporting layer (1) is designed in the form of a perforated jacket.

**9.** A method for the filtration of viscose, **characterized in that** a medium to be filtered is supplied to a device and filtered through a filter system, associated with the device, according to any one of Claims 1 to 8, and is removed from the device.

**10.** A method according to Claim 9, **characterized in that** the device is designed in the form of a backflush filter, in particular in the form of an automatic backflush filter.

**11.** A method according to one of Claims 9 or 10, **characterized in that** a medium to be filtered is supplied to the filter system at a temperature in a range of from approximately 10°C to approximately 55°C in the device.

**12.** A method according to any one of Claims 9 to 11, **characterized in that** it is implemented by a filter system, wherein the permeable layer (3) has a through-flow, measured at a differential pressure of 200 Pa, in a range of from approximately 40 l/(dm$^2$ * min) to approximately 900 l/(dm$^2$ * min).

**13.** A device for the filtration of viscose according to any one of Claims 9 to 12, comprising a filter system according to any one of the Claims 1 to 8.

**14.** Use of a filter system according to Claim 1 in a device for the filtration of viscose or a method for the filtration of viscose.


**Revendications**

**1.** Système de filtre ayant au moins une couche (3) perméable pour une substance à filtrer, comprenant au moins une partie de non-tissé et au moins une partie de support laminée à la plaque (5) en métal déployé ou en tôle perforée, qui est soudée ou vitrifiée avec au moins une zone partielle d'un côté de la partie de non-tissé, et une couche d'appui (1), étant entendu que la partie de support (5) est agencée sur un côté de la partie de non-tissé qui est opposé à la couche d'appui (1) ou dirigé vers celle-ci.

**2.** Système de filtre selon la revendication 1, **caractérisé en ce que** la partie de support (5), réalisée en tant que partie de métal déployé, présente une longueur de maille comprise dans une marge d'environ 0,08 mm à environ 5 mm.

**3.** Système de filtre selon l'une des revendications précédentes, **caractérisé en ce que** la partie de support (5) et/ou la partie de non-tissé est réalisée dans un matériau choisi parmi un groupe comprenant des alliages contenant du fer et/ou du nickel.

**4.** Système de filtre selon l'une des revendications précédentes, **caractérisé en ce que** la partie de non-tissé est une partie de non-tissé à fibres orientées et/ou embrouillées.

**5.** Système de filtre selon la revendication 4, **caractérisé en ce que** la partie de non-tissé est constituée d'une ou plusieurs couches de fibres embrouillées.

**6.** Système de filtre selon l'une des revendications 4 ou 5, **caractérisé en ce que** les fibres embrouillées présentent différents diamètres de fibres.

**7.** Système de filtre selon l'une des revendications précédentes, **caractérisé en ce qu'**il présente en outre au moins une couche intermédiaire (2), de préférence réalisée dans un métal déployé, et/ou au moins une couche extérieure (4) formant une gaine de serrage.

**8.** Système de filtre selon l'une des revendications précédentes, **caractérisé en ce que** la couche d'appui (1) est réalisée en tant que gaine perforée.

**9.** Procédé pour la filtration de viscose, **caractérisé en ce qu'**une substance à filtrer est amenée à un dispositif et elle est filtrée et extraite du dispositif au moyen d'un système de filtre selon l'une des revendications 1 à 8 adjoint au dispositif.

**10.** Procédé selon la revendication 9, **caractérisé en ce que** le dispositif est conçu en tant que filtre avec levage à contre-courant, en particulier en tant que filtre avec levage à contre-courant automatique.

**11.** Procédé selon l'une des revendications 9 ou 10, **caractérisé en ce qu'**une substance à filtrer est amenée au système de filtre dans le dispositif à une température comprise dans une marge d'environ 10 °C à environ 55 °C.

**12.** Procédé selon l'une des revendications 9 à 11, **caractérisé en ce qu'**il est exécuté avec un système de filtre, étant entendu que la couche perméable (3) présente un débit, mesuré à une pression différentielle de 200 Pa, comprise dans une marge d'environ 40 l/(dm$^2$*min) à environ 900 l/(dm$^2$*min).

**13.** Dispositif destiné à la filtration de viscose selon l'une des revendications 9 à 12, comprenant un système de filtre selon l'une des revendications 1 à 8.

**14.** Utilisation d'un système de filtre selon la revendication 1 dans un dispositif destiné à la filtration de viscose ou un procédé pour la filtration de viscose.

EP 2 552 564 B1

Fig.1

Fig.2

10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 2006685 A1
- EP 0058656 B1
- WO 9625217 A1
- US 4358371 A
- GB 1146071 A1
- EP 1297878 A2